# EUROPEAN PATENT APPLICATION

(11) **EP 4 047 728 A1**
(43) Date of publication of application: **24.08.2022**
(21) Application number: 21157606.1
(22) Date of filing: 17.02.2021
(51) Int. Cl.: H01M 50/204, H01M 50/249, H01M 50/28, H01M 50/282, H01M 50/367, H01M 50/271, H01M 50/30, H01M 50/502, H01M 50/358

(54) **BATTERY SYSTEM AND VEHICLE INCLUDING THE BATTERY SYSTEM**

(71) Applicant: Samsung SDI Co., Ltd., Yongin-si, Gyeonggi-do 17084 (KR)
(72) Inventor: Reinprecht, Wolfgang, 8144 Attendorf (AT); Erhart, Michael, 8054 Seiersberg-Pirka (AT); Gernot, Kraberger, 8010 Graz (AT); Pucher, Matthias, 8403 Lebring (AT)
(74) Representative: Gulde & Partner

(57) **Abstract**

The present disclosure refers to a battery system (10) for an electric vehicle, comprising a plurality of battery cells (12) and a battery housing (30) enclosing the plurality of battery cells (12), wherein the battery cells (12) are interconnected with one another via electrical connecting means (18, 19) contacting electrode terminals (16) of the battery cells (12), characterized by an electrically and thermally insulating cover element (20) covering the electrode terminals (16) and the connecting means (18, 19) so that the electrode terminals (16) and connecting means (18, 19) are shielded from venting products exiting one or more of the battery cells (12) towards the battery housing (30) in case of a thermal runaway.

## Description

### Field of the Disclosure

The present invention relates to a battery system comprising a protection for electrically conducting elements from a venting gas in case of a thermal runaway. Further, the present invention relates to a vehicle comprising the battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*).

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle.

To provide thermal control of the enclosed battery cells within the battery housing a thermal management system may be used to efficiently emit, discharge and/or dissipate heat generated within the battery housing. In certain conditions of the battery cells an increase of the internal temperature can lead to abnormal reactions occurring in the battery cells. An example of such abnormal operation conditions is a thermal runaway in a battery cell that may be entered by a strongly overheated or overcharged cell. The thermal runaway is a self-accelerating chemical reaction inside the battery cell, which produces high amounts of heat and venting gas, until all available material is exhausted.

A state of the art venting concept of a battery is to let the hot venting gas of a battery cell in thermal runaway condition expand into the battery housing and escape through a housing venting valve to the outside (the environment of the battery housing).

The exhausted material (venting products) may comprise hot and toxic venting gas as well as conductive solid matter (material) like graphite powder and metal fragments. Said electrically conductive material may deposit on electrically active parts, also called live parts, on top of the cells causing short circuits and arcing. Thus, the thermal runaway of one battery cell could cause short circuits and thus a consecutive thermal runaway of other battery cells leading into a complete damage of the battery (the battery pack), the battery system and the vehicle.

The pollution caused by graphite and metallic parts can affect most of the battery cells or battery modules of a battery and lead to short circuits, because all battery cells or modules are within the same battery housing. Depending on the location of the battery cell in thermal runaway with respect to the housing venting valve, different air streams might develop and cause different portions of the battery to be affected.

US 2014/0234677 A1 describes a battery module which includes a plurality of battery cells aligned in one direction, neighbouring cells being interconnected with one another via electrical connecting means contacting electrode terminals of the battery cells, and a vent portion through which venting gas may be exhausted. A cover plate covers the vent portions, wherein a heat-resistance member is arranged between the battery cells and the cover plate, the cover plate and the heat-resistance member having vent openings each formed in a region corresponding to one of the vent portions of the battery cells. On top of the cover plate a cover channel is arranged covering the vent openings so that no venting gas can expand into the battery housing. Via the cover channel the venting gas exiting the battery cells is directed toward an exhaust port. Such an arrangement is constructively complex.

It is thus an object of the present invention to overcome or reduce at least some of the drawbacks of the prior art and to provide an improved thermal runaway handling, in particular to provide a battery system better protected against the venting products exhausted at a thermal runaway.

### Summary of Invention

Embodiments of the present disclosure seek to solve at least one of the problems existing in the prior art to at least some extent.

In particular, a battery system for a vehicle is provided comprising a plurality of battery cells and a battery housing enclosing the plurality of battery cells. The battery cells are interconnected with one another via electrical connecting means contacting electrode terminals of the battery cells. The connecting means may connect an electrode terminal of one battery cell to the electrode terminal of another battery cell, in particular of a neighboring battery cell. The battery cells may be connected in series and/or in parallel. A battery module may be formed by such an interconnection as explained above. Thus, multiple battery cells may be interconnected with one another via their electrode terminals and connecting means so as to form a battery module. Also, the battery system may comprise multiple battery modules each comprising multiple battery cells, wherein neighboring modules are interconnected with one another via said electrical connecting means contacting electrode terminals of the battery cells. In other words, the battery cells may be arranged in one or more rows so as to form modules electrically interconnected with one another by the electrical connecting means, either within rows and therefore within the modules, or across rows so as to connect the modules. The interconnected cells and/or modules may be spatially separated from each other via crossbeams. The electrical connecting means may e.g. comprise or consist of busbars. The battery modules may form a battery pack as explained above.

According to the invention the battery system comprises an electrically and thermally insulating cover element covering the electrode terminals and the connecting means so that the electrode terminals and connecting means are shielded from venting products exiting one or more of the plurality of battery cells into the battery housing in case of a thermal runaway. In particular, the venting products may exit the cells into a venting channel of the battery housing. The battery system may thus further comprise a venting channel for receiving the venting products that exit one or more of the plurality of battery cells in case of a thermal runaway. Said venting channel may be arranged between the cover element and a battery cover of the battery housing. Because the cover element covers the electrode terminals and the connecting means the venting products, in particular conductive solid material like graphite powder and metal fragments, deposit onto the cover element, but not directly onto the live parts, i.e. the electrode terminals and the connecting means. As the cover element is electrically and thermally insulating the working of the live parts underneath the cover element is not impacted. In addition, the cover element provides a mechanical separation between said live parts and the venting products. Thus, arcing, short circuits and pollution of the cells can be prevented. Also, thanks to the thermal insulation of the cover element the cells/modules are shielded from the heat of the venting products deposited onto the cover element. Thus, heat transfer to neighbouring cells or modules of the vented cell and therefore a chain reaction scan be prevented. This way, the cover element shields the electrode terminals and the connecting means from the venting products. The cover element may be arranged to cover further elements of the battery system, in particular all the live parts of the battery which may otherwise be impacted by the venting products.

With the invention, venting products may still be vented into the battery housing in case of a thermal runaway. With respect to the prior art, however, the venting products do not damage the live parts or the battery system as they do not (directly) deposit onto the cells and live parts, but onto the cover element.

With respect to the prior art venting concept of US 2014/0234677 A1 a constructively simpler venting concept is provided. Said prior art does not disclose to cover the electrode terminals and the connecting means so that venting products may be deposited onto these live parts without a negative impact. Instead said prior art proposes a different solution where the venting products are lead away from the cells via the guiding channel to prevent any venting products entering the battery housing.

According to an embodiment the cover element is adapted to the contour of the electrode terminals and connecting means. In particular, the contour or form of the cover element may be adapted to the contour of all the elements it covers, e.g. all the contour of all the live parts it covers. In other words, the cover element may be adapted in its three-dimensional shape to the parts it covers, in particular the electrode terminals and the busbar. Such an adaptation of the contours of the cover element and the covered parts leaves less or no access for the venting products to reach the covered parts. This allows for a particularly reliable shielding.

According to an embodiment the cover element fully covers a venting side of the plurality of battery cells comprising the electrode terminals and connecting means. The cover element may thus not only cover the electrode terminals and connecting means, but rather the complete venting side of the plurality of battery cells, meaning the side at which the venting products leave the cells in case of a thermal runaway. In this way not only the electrode terminals and connecting means, but rather the complete battery cells are separated from the venting channel which in this case may be delimited by a battery cover on a first side and by the cover element on a second, opposite side. The cover element fully covering the venting side of the cells may therefore reliably prevent pollution of the cells. Also, any further live parts arranged at the venting side may be covered this way and may thus be shielded from the venting products. The venting products may deposit onto the whole surface of the plurality of battery cells without any elements underneath taking damage. A thermal separation of the remaining cells may thus be achieved so that a thermal propagation of the runaway incident may be prevented and the risk of a burn down of the entire battery system be reduced.

The cover element, however, even when fully covering a venting side of the plurality of battery cells comprises venting means. According to an embodiment the cover element comprises venting means aligned with venting exits of the battery cells and adapted such that the venting products exiting the battery cells can pass through the venting means into the venting channel. This allows for the venting of the cells into the battery housing in case of thermal runaway. The venting means of the cover element may be aligned to and formed correspondingly to the venting exits of the battery cells. The venting means of the cover element and/or the venting exits of the battery cells may be in the form of slots. According to a respective embodiment the venting means comprise any one of the following: through-holes extending through the cover element, venting valves, burst membranes bursting under the pressure of the venting products. The cover element comprising through-holes makes for a particularly simple venting means. Burst membranes may be of the same material as the cover element, but at a lower thickness so that the membranes burst as soon as the venting starts. Also, venting valves may be arranged in the cover element adapted to open at a predetermined pressure.

According to an embodiment the cover element can resist temperatures of at least 1000°C and/or up to 1200°C. In particular, the cover element may be adapted to withstand temperatures between 1000°C and 1200°C, preferably between 1100°C and 1200°C. The cover element thus shields the live parts of the cells reliably even at temperatures of the venting products of a 1000°C or more. If the cover element were not able to resist temperatures of at least 1000°C, the cover element may under certain circumstances be damaged due to the hot venting products which temperatures may be at 1000°C or even higher. The cover element withstanding temperatures of up to 1200°C, however, is sufficient as the temperature of the venting products does in general not exceed this temperature.

According to an embodiment the cover element comprises a composite material with a woven fabric and a matrix support material, in particular a resin. The woven fabric may be in the form a mat and may comprise fibers, in particular glass and/or basalt fibers. The woven fabric may thus comprise e.g. a glass fiber mat. The matrix support material, which may preferably be a resin, provides stability to the cover element, in particular during venting. Thanks to the composite material the cover element may, however, be flexible enough to be adapted to the contour of the elements it covers. Thus, the cover element may be adapted to the contour of the electrode terminals and connecting elements. This allows for a particularly reliable shielding.

According to a respective embodiment, the cover element comprises a heat reacting material adapted to melt when exposed to the venting products and to subsequently harden so as to form, in combination with the composite material, a mechanically rigid cover plate. The heat reacting material is to be understood as a material reacting to the presence of heat, in particular at the temperatures occurring during a thermal runaway. According to an embodiment, the heat reacting material comprises a glass granulate, in particular a gas-filled glass granulate. The glass granulate may be an expanded glass granulate. In particular, an arrangement of multiple layers of the composite material and one or more layers of the heat reacting material are advantageous. Thus, according to an embodiment, the cover element comprises at least two layers of the composite material and an intermediate layer of the heat reacting material. The cover element according to this embodiment reacts to the venting products in that the heat reacting material melts and combines with the woven fabric thereby sealing it. The heat reacting material preferably has a melting point lower than a melting point of the woven fabric. The matrix support material of the composite material of the cover element may dissolve during the venting process. The cover element remains dimensionally stable and sealed, however, due to the heat reacting material. Thus, while in case of a thermal runaway the resin or other matrix support material and therefore the cover element might lose its mechanical stability at temperatures higher than 200°C, the heat reacting material is right in place, and melts in the higher temperature range under venting stream exposure thereby keeping the woven fabric and therefore the cover element tightly sealed to ensure the shielding of the remaining cells and live parts. After melting the heat reacting material hardens and thereby forms, in combination with the composite material, a mechanically rigid, heat resistant cover plate. This cover plate may serve as a touch protection for the battery system.

According to another aspect of the present disclosure, a vehicle including a battery system as defined above is provided. The battery system is preferably integrated into an underbody construction of the vehicle which allows the battery system to have a substantially flat shape. The vehicle is advantageous as in case of a thermal runaway live parts are shielded from exhausted venting products, which may comprise electrically conductive dust. Thereby an occurrence of short circuits is largely reduced or prevented.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 is a side view illustrating in extracts a battery system according to an embodiment,
Fig. 2 is a top view illustrating in extracts the battery system of Fig. 1,
Fig. 3 is a side view illustrating a cover element according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. For better readability, not all elements in the figures are marked with reference signs. Especially in the case of redundant elements, only some of the elements may have reference symbols. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Herein, the terms "top" and "bottom" are defined according to the z-axis. For example, the top cover is positioned at the upper part of the z-axis, whereas the bottom cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

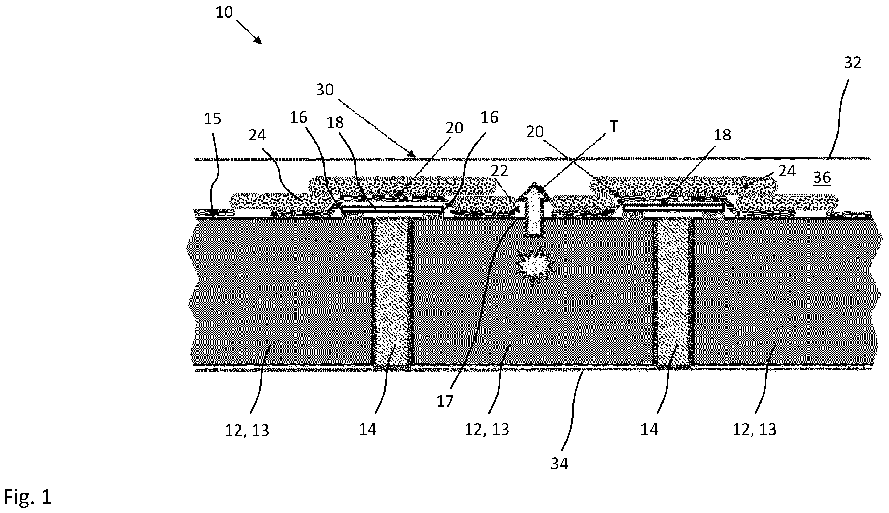

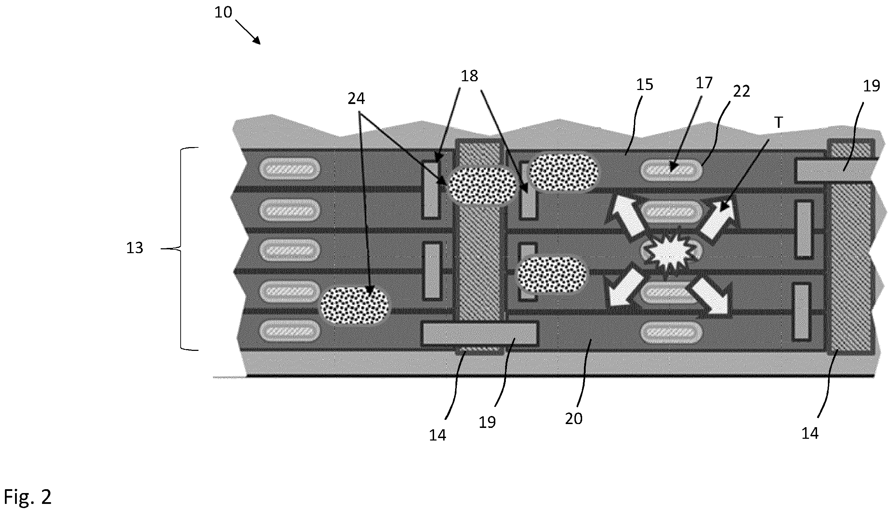

In Figures 1 and 2 a battery system 10 for an electric vehicle is shown. The battery system 10 comprises a plurality of battery cells 12, wherein multiple battery cells 12 are arranged in a row forming a battery module 13. Neighboring battery modules 13 are separated from one another by crossbeams 14. The battery system 10 further comprises a battery housing 30, including a top cover 32 and a bottom cover 34, enclosing the plurality of battery cells 12. The battery housing may comprise not shown side covers at the left and at the right. The battery cells 12 are arranged inside battery housing 30 such that a hollow space 36 is provided between the battery cells 12 and the top cover 32.

Each battery cell 12 comprises two electrode terminals 16 which are connected with electrodes (not shown) of the respective battery cell 12. The battery cells 12 are interconnected with one another via busbars 18 forming electrical connecting means between the electrode terminals 16 of two neighboring battery cells 12. In particular, the battery cells 12 are interconnected with one another in series via the busbars 18 within the modules 13. Furthermore, the modules 13, and therefore their battery cells 12, are interconnected with one another in series via busbars 19 extending between neighboring modules 13, see Figure 2. The electrode terminals 16 and the busbars 18, 19 are arranged at a venting side 15 of the battery cells 12, which in this case is the upper side of the battery cells 12 facing the top cover 32, wherein each of the battery cells 12 comprises a venting exit 17 at that side for allowing venting products 24 produced in an abnormal operation condition, also known as a thermal runaway T or a thermal event, to be released from the battery cells 12 if a certain overpressure and/or a certain temperature inside affected battery cells 12 is exceeded.

The battery system 10 further comprises an electrically and thermally insulating cover element 20 covering the venting side 15 of the plurality of battery cells 12, including the electrode terminals 16 and the busbars 18, 19. The cover element 20 comprises venting openings 22 as venting means which are aligned with the venting exits 17 of the battery cells 12 so that the venting products 24 exiting the battery cells 12 during a thermal runaway can pass through venting exits 17 and the venting means 22 towards the top cover 32 into the hollow space 36. From the hollow space 36, which may be understood as a venting channel, the venting products may be directed to an exterior of the battery system 10 (not shown). The cover element 20 is adapted to the contour, i.e. the three-dimensional shape, of the parts it covers, in particular the electrode terminals 16 and the busbars 18, 19 as can be seen in Figure 2. This allows for a particularly reliable shielding of the covered elements from the venting products.

The venting products 24, which may comprise not only hot and toxic venting gas, but also conductive solid material like graphite powder or metal fragments, may, however, at least in part deposit onto the plurality of battery cells 12, albeit not directly. As the battery cells 12 are covered by the cover element 20 the electrode terminals 16 and busbars 18, 19 as well as the complete venting side 15 are shielded from depositing venting products 24 by the cover element 20. As can be seen in Figures 1 and 2 the venting products 24 deposit onto the cover element 20 without any contact to the electrode terminals 16 and busbars 18, 19. As the cover element 20 is electrically and thermally insulating the working of the electrode terminals 16 and busbars 18, 19, and any further live parts underneath the cover element 20, is not impacted. In particular, no arcing or short circuits occur due to the conductive solid material of the venting products 24. The cover element 20 and top cover 32 of the battery housing 30 thus form a venting channel to guide the venting products 24 towards the battery exit without contact to the cells 12 and their live parts.

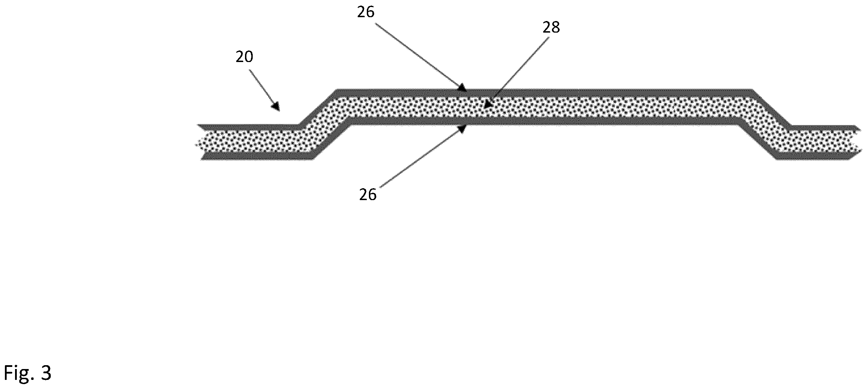

As can be seen in Fig. 3, the cover element 20 comprises two layers 26 of a composite material with a woven fabric and a matrix support material, i.e. glass fiber mats with resin, and an intermediate layer 28 of an expanded glass granulate as a heat reacting material. The expanded glass granulate reacts to heat occurring during a thermal runaway in that it melts when exposed to the venting products 24 and in that it subsequently hardens so as to form, in combination with the composite material, a mechanically rigid cover plate. The cover element 20 thus reacts to the venting products 24 in that the intermediate layer 28 melts and combines with the two glass mat layers 26 thereby sealing them. The heat reacting material therefore has a melting point lower than a melting point of the woven fabric. The resin may dissolve during the venting process making the cover element more flexible. The cover element 20, however, remains dimensionally stable and sealed due to the heat reacting material which is right in place to form with the glass fiber mats a mechanically rigid, heat resistant cover plate to protect remaining components against the hot venting products 24. Thus, the cover element may keep its form adapted to the contour, i.e. the three-dimensional shape, of the parts it covers, in particular the electrode terminals and the busbar.

The cover element 20 may serve as a touch protection. Known touch protections can withstand temperatures of up to 200°C, which is good under normal operating conditions of a battery system. In case of a thermal runaway, however, the inside of a cell will heat up until the inside pressure exceeds the venting valve limit and a venting stream with temperatures over 1000°C will exit the cell and most likely flow towards the touch protection. Standard touch protections cannot withstand these temperatures. As a touch protection, materials which can withstand temperatures up to 1200°C, as e.g., Mica (flat plates), or molded cast with fiber shred may be used. However, these materials will not remain their shape when exposed to the venting products. With the cover element of the invention, however, comprising a sandwich of glass mat with resin or other matrix support material and a granulate, the cover element as explained above remains mechanically in shape.

In summary, with the inventive battery system the venting gas and dust is guided within the hollow space between the cover element and a battery cover thereby preventing remaining cells or cell stacks to be polluted by the venting products, in particular dust and graphite particles. The cover element keeps the dust, graphite and metallic parts away from live parts of the battery, like the electrode terminals and the busbars, so that arcing and short circuits are prevented. The cover element remains electrically insulating and sufficiently thermally insulating in the z-direction also at elevated temperatures. In addition, the cover element formed as a sandwich construction of two glass mats and an intermediate heat reactant layer may serve as a touch protection for a battery pack. The two glass mats withstand the hot venting products during a thermal runaway while the heat reacting material forms a filler between the glass mats and is right in place for fire protection. The melting filler forms with the glass mats a steady heat resistant cover plate. In addition, thermal separation of the remaining cell stacks is achieved by the cover element so that thermal propagation is slowed down and the risk of burn down of the complete battery pack is reduced.

### Reference signs

- 10: battery system
- 12: battery cells
- 13: modules
- 14: crossbeams
- 15: venting side
- 16: electrode terminals
- 17: venting exits
- 18: busbars/ connecting means
- 20: cover element
- 22: venting openings
- 24: venting products
- 26: layers of composite material
- 28: intermediate layer
- 30: battery housing
- 32: top cover
- 34: bottom cover
- 36: hollow space
- T: Thermal runaway

## Claims

1. A battery system (10) for an electric vehicle, comprising a plurality of battery cells (12) and a battery housing (30) enclosing the battery cells (12), wherein the battery cells (12) are interconnected with one another via electrical connecting means (18, 19) contacting electrode terminals (16) of the battery cells (12), further comprising an electrically and thermally insulating cover element (20) covering the electrode terminals (16) and the connecting means (18, 19) so that the electrode terminals (16) and connecting means (18, 19) are shielded from venting products (24) exiting one or more of the battery cells (12) towards the battery housing (30) in case of a thermal runaway.

2. The battery system (10) of claim 1, wherein cover element (20) is adapted to the contour of the electrode terminals (16) and connecting means (18, 19).

3. The battery system (10) of claim 1 or 2, wherein the cover element (20) fully covers a venting side of battery cells (12) comprising the electrode terminals (16) and connecting means (18, 19).

4. The battery system (10) of any one of the preceding claims, wherein the cover element (20) comprises venting means (22) aligned with venting exits of the battery cells (12) and adapted such that the venting products (24) exiting the battery cells (12) can pass through the venting means (22) into a venting channel of the battery housing.

5. The battery system (10) of claim 4, wherein the venting means (22) comprise any one of the following: through-holes (22) extending through the cover element (20), venting valves, burst membranes bursting under the pressure of the venting products (24).

6. The battery system (10) of any one of the preceding claims, wherein the cover element (20) can resist temperatures of at least 1000°C and/or up to 1200°C.

7. The battery system (10) of any one of the preceding claims, wherein the cover element (20) comprises a composite material (26) with a woven fabric and a matrix support material.

8. The battery system (10) of claim 7, wherein the woven fabric comprises glass and/or basalt fibers.

9. The battery system (10) of claim 7 or 8, wherein the cover element (20) comprises a heat reacting material (28) adapted to melt when exposed to the venting products and to subsequently harden so as to form, in combination with the composite material (26), a mechanically rigid cover plate.

10. The battery system (10) of claim 9, wherein the heat reacting material (28) has a melting point lower than a melting point of the woven fabric.

11. The battery system (10) of claim 9 or 10, wherein the heat reacting material (28) comprises a glass granulate.

12. The battery system (10) any of one of claims 9 to 11, wherein the cover element (20) comprises at least two layers of the composite material (26) and an intermediate layer of the heat reacting material (28).

13. An electric vehicle comprising a battery system (10) of any one of the preceding claims.

## Amended claims

### Amended claims in accordance with Rule 137(2) EPC.

1. A battery system (10) for an electric vehicle, comprising a plurality of battery cells (12) and a battery housing (30) enclosing the battery cells (12), wherein the battery cells (12) are interconnected with one another via electrical connecting means (18, 19) contacting electrode terminals (16) of the battery cells (12), further comprising an electrically and thermally insulating cover element (20) covering the electrode terminals (16) and the connecting means (18, 19) so that the electrode terminals (16) and connecting means (18, 19) are shielded from venting products (24) exiting one or more of the battery cells (12) towards the battery housing (30) as the venting products (24) deposit onto the cover element (20) in case of a thermal runaway.

2. The battery system (10) of claim 1, wherein cover element (20) is adapted to the contour of the electrode terminals (16) and connecting means (18, 19).

3. The battery system (10) of claim 1 or 2, wherein the cover element (20) fully covers a venting side of battery cells (12) comprising the electrode terminals (16) and connecting means (18, 19).

4. The battery system (10) of any one of the preceding claims, wherein the cover element (20) comprises venting means (22) aligned with venting exits of the battery cells (12) and adapted such that the venting products (24) exiting the battery cells (12) can pass through the venting means (22) into a venting channel of the battery housing and that the venting products (24) can deposit onto a surface of the cover element (20).

5. The battery system (10) of claim 4, wherein the venting means (22) comprise any one of the following: through-holes (22) extending through the cover element (20), venting valves, burst membranes bursting under the pressure of the venting products (24).

6. The battery system (10) of any one of the preceding claims, wherein the cover element (20) comprises a composite material (26) with a woven fabric and a matrix support material, in particular a resin, providing stability to the cover element (20).

7. The battery system (10) of claim 6, wherein the woven fabric comprises glass and/or basalt fibers.

8. The battery system (10) of claim 6 or 7, wherein the cover element (20) comprises a heat reacting material (28) adapted to melt when exposed to the venting products and to subsequently harden so as to form, in combination with the composite material (26), a mechanically rigid cover plate.

9. The battery system (10) of claim 8, wherein the heat reacting material (28) has a melting point lower than a melting point of the woven fabric.

10. The battery system (10) of claim 8 or 9, wherein the heat reacting material (28) comprises a glass granulate.

11. The battery system (10) any of one of claims 8 to 10, wherein the cover element (20) comprises at least two layers of the composite material (26) and an intermediate layer of the heat reacting material (28).

12. An electric vehicle comprising a battery system (10) of any one of the preceding claims.
